# EUROPEAN PATENT SPECIFICATION

(11) **EP 4 112 484 B1**
(45) Date of publication and mention of the grant of the patent: **06.08.2025**
(21) Application number: 22180639.1
(22) Date of filing: 23.06.2022
(51) Int. Cl.: B65B 9/20, B65B 59/00, B65B 51/30, B29C 65/00

(54) **SEALING PROCESS AND DEVICE AND PACKAGING DEVICE FOR PACKAGING FOOD PRODUCTS**
SIEGELVERFAHREN UND -VORRICHTUNG UND VERPACKUNGSVORRICHTUNG ZUM VERPACKEN VON LEBENSMITTELN
PROCEDE ET DISPOSITIF DE SCELLEMENT ET DISPOSITIF D'EMBALLAGE POUR L'EMBALLAGE DE PRODUITS ALIMENTAIRES

(30) Priority: 28.06.2021 IT 202100016904
(43) Date of publication of application: 04.01.2023
(73) Proprietor: Pavan S.p.A., 35015 Galliera Veneta (PD) (IT)
(72) Inventor: MARINI, Roberto, 51031 AGLIANA (PT) (IT); VETTORI, Alessandro, 51010 MASSA E COZZILE (PT) (IT)
(74) Representative: Dondi, Silvia

(56) References cited:
- EP-A1- 2 644 514
- EP-A1- 3 424 829
- WO-A1-2008/053600
- GB-A- 1 527 065
- US-A- 5 852 920
- US-A1- 2021 155 354
- US-B1- 6 167 677

## Description

The present invention relates to a sealing process and a device for sealing edges of film folded into a tubular shape for continuous packaging of food products and a packaging device for packaging food products.

In particular, the technical field of the present invention is the longitudinal sealing of both plastic and paper films coupled with heat-sealing film on VFFS ("Vertical Form Fill Seal") or HFFS ("Horizontal Form Fill Seal") type packaging machines with continuous operation.

Currently, on both vertical and horizontal packaging machines with continuous operation, the plastic film, before being filled with the product to be packaged, is folded and sealed longitudinally until it takes a tubular shape.

The most common methods for continuous longitudinal sealing are mainly four:
- Sealing by blowing hot air: an electrical resistance heats a flow of hot air that invests the film causing the two layers of heat-sealing film to melt.
- Sealing by means of a rotating belt: an electrical resistance heats a thin steel belt that is set in motion at the same speed as the film. The heat is transferred to the film by contact.
- Scratch sealing: an electrical resistance heats a fixed metallic sliding block that is pressed against the film. The heat is transmitted by contact.
- Ultrasonic sealing: two metal bodies, one movable called a sonotrode and one fixed called anvil, are brought into contact by two opposite sides of the film. The sonotrode, by vibrating at high frequency, causes the generation of heat by friction between the two film edges and the consequent sealing.

The prior art described above is identifiable, by way of example, in some patents such as US3729359, US5463850, US5924268, US20100043352, US5852920.

The introduction of coupled films paper - heat-sealing material has highlighted the limits of the systems currently in use for longitudinally sealing the packages of the VFFS and HFFS machines. Paper packages intended to contain dry products, such as pasta, require a greater thickness than that used for plastic films (polyethylene and polypropylene) in order to have the same mechanical strength. The greater thickness combined with the lower thermal conductivity of paper compared to the plastic materials hinders the transmission of heat between the heating element and the heat-sealing film layer coupled with the paper.

In order to be able to reliably seal these packages using one of the traditional systems, it is necessary to act on three working parameters: increase in the temperature of the sealing elements, increase in the pressure that these elements exert on the film, decrease in the film speed. This results in a higher energy expenditure, a reduced productivity and an early wear of the sealing machine elements.

Document US2021/155354 A1 discloses a machine for generating re-closable packages. The machine includes a forming tube configured to impart a tubular shape to a continuous film, a driving module that moves the film tube in a forward movement direction at a first forward movement speed, a longitudinal sealing tool for sealing the longitudinal ends of the film with a tubular shape, a film tube being generated. The machine includes a first driving assembly for moving the film tube in the forward movement direction at a second forward movement speed, and a transverse sealing and cutting tool for transversely sealing and cutting the film tube, a package being obtained as a result. The machine also includes a second driving assembly located upstream the longitudinal sealing tool and configured for moving the re-closable strip at a third forward movement speed, the first, second and third forward movement speeds being equal.

In this context, the technical task underpinning the present invention is that of proposing a sealing process and a device for sealing edges of a film folded into a tubular shape for continuous packaging of food products and a packaging device for packaging food products, which obviate the drawbacks of the prior art cited above.

In particular, the aim of the present invention is to propose a sealing process and a device for sealing edges of a film folded into a tubular shape for continuous packaging of food products and a packaging device for packaging food products, which guarantee high sealing performance with films of different materials.

Another aim of the present invention is to make available a process and a device for sealing the edges of a film folded into a tubular shape for continuous packaging of food products and a packaging device for packaging food products, which do not result in a reduction in productivity compared to the known solutions.

The stated technical task and specified objects are substantially achieved by a process for sealing edges of a film folded into a tubular shape for continuous packaging of food products, comprising the steps of:
- conveying the film forward along a conveyance path;
- during the step of conveying the film forward along the conveyance path, sealing the two folded edges together.

The step of sealing the two folded edges together comprises the sub-step of bringing the two edges near each other in order to place them in contact and compress them. The step of sealing the two folded edges together comprises the step of heating the two edges. The step of bringing the two edges near each other in order to place them in contact and compress them and the step of heating the two edges are at least partly performed simultaneously.

The step of bringing the two edges near each other in order to place them in contact and compress them takes place from opposite sides of the edges.

According to one aspect of the process, the step of heating the two edges takes place continuously at a predetermined sealing temperature.

Preferably, the sealing process comprises the step of cooling the two sealed edges, during the step of conveying the film forward along a conveyance path.

The stated technical task and specified objects are substantially achieved by a device for sealing edges of a film folded into a tubular shape for continuous packaging of food products, the edges extending longitudinally and being folded outward, comprising:
- conveying means for conveying the film forward along a conveyance path;
- sealing means for sealing the two folded edges in a sealing zone of the conveyance path.

The sealing means is movable between a first position, in which they are away from the sealing zone, and a second position, in which they are in the sealing zone. In the second position, the sealing means is operatively active on the two edges so as to compress and heat them.

The sealing means is arranged on opposite sides of the sealing zone, the passage from the first to the second position takes place by bringing the sealing means near to each other and to the sealing zone Preferably, the sealing means is configured to exert, in the second position, a substantially constant sealing temperature.

According to the invention, the sealing means comprises:
- two sliding blocks that are opposite relative to the sealing zone and movable towards/away from each other between the two positions;
- two heating elements, each mounted at one end of one of the sliding blocks.

According to the invention, the sealing device comprises movement means for moving the sliding blocks between the two positions. The movement means is configured to:
- exert a first pressure on the sliding blocks to bring them from the first to the second position, or vice-versa;
- exert a second pressure, lower than the first pressure, on the sliding blocks in the second position to compress the edges.

Preferably, the sealing device comprises a system for cooling the sealed edges located downstream of the sealing means.

In accordance with one embodiment, the heating elements are metal straps.

In accordance with one embodiment, the heating elements are plate-like. The specified technical task and the specified purposes are substantially achieved by a packaging device for packaging food products, comprising:
- a sealing device according to what is described;
- a forming tube that receives at the inlet a sheet of film and forms it in a tubular shape, arranged upstream of the sealing device;
- a cutting device of the film folded into a tubular shape into packages, arranged downstream of the sealing device.

The forming tube comprises a device for folding and coupling the edges.

Additional features and advantages of the present invention will become more apparent from the illustrative and thus non-limiting description of a preferred but not exclusive embodiment of a process and a device for sealing edges of a film folded into a tubular shape for continuous packaging of food products and a packaging device for packaging food products, as illustrated in the accompanying drawings in which:
- figure 1 illustrates a perspective view of a device for sealing edges of a film folded into a tubular shape for continuous packaging of food products, according to the present invention;
- figure 2 illustrates a perspective view of an alternative embodiment (horizontal conveyance path) of the sealing device of figure 1;
- figure 3 illustrates a detail (enlargement of the sealing zone) of the sealing device of figure 1, in which the sealing means is in an open position.

With reference to the figures, a device for sealing the edges of a film 20 folded into a tubular shape for continuous packaging of food products is indicated with the number 1. In particular, the food products referred to herein are dry products, such as pasta.

The film folded into a tubular shape 20 has two longitudinal edges 21 folded outward to be sealed. The sealing of the two edges 21 involves the formation of the so-called fin (also known as "fin seal", "lap seal", "pinch seal").

The present invention is particularly effective since the film 20 is made of paper material. In this case, a heat-sealing material is applied along at least one of the two edges 21 to facilitate the sealing of the edges 21.

The sealing device 1 comprises conveying means 2 for conveying the film 20 forward along a conveyance path. Preferably, the forward conveying means 2 comprises at least one belt transfer unit 3. In other words, the movement means 2 comprises at least one transfer strap.

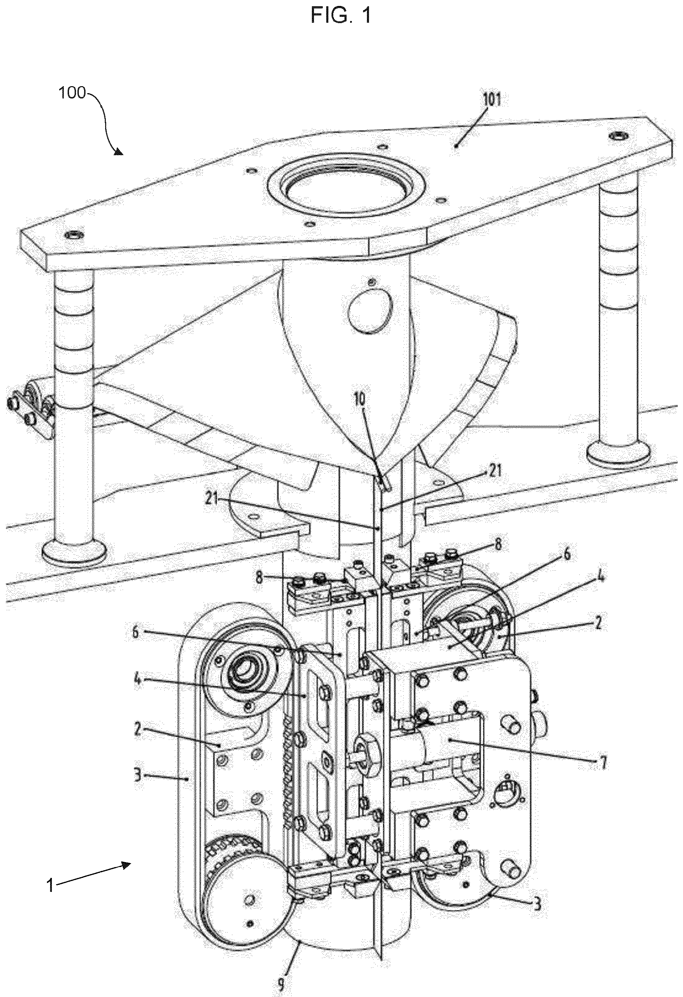

In accordance with one embodiment, as illustrated in figure 1, the conveyance path is substantially vertical. In this case, the packaging is of the VFFS type.

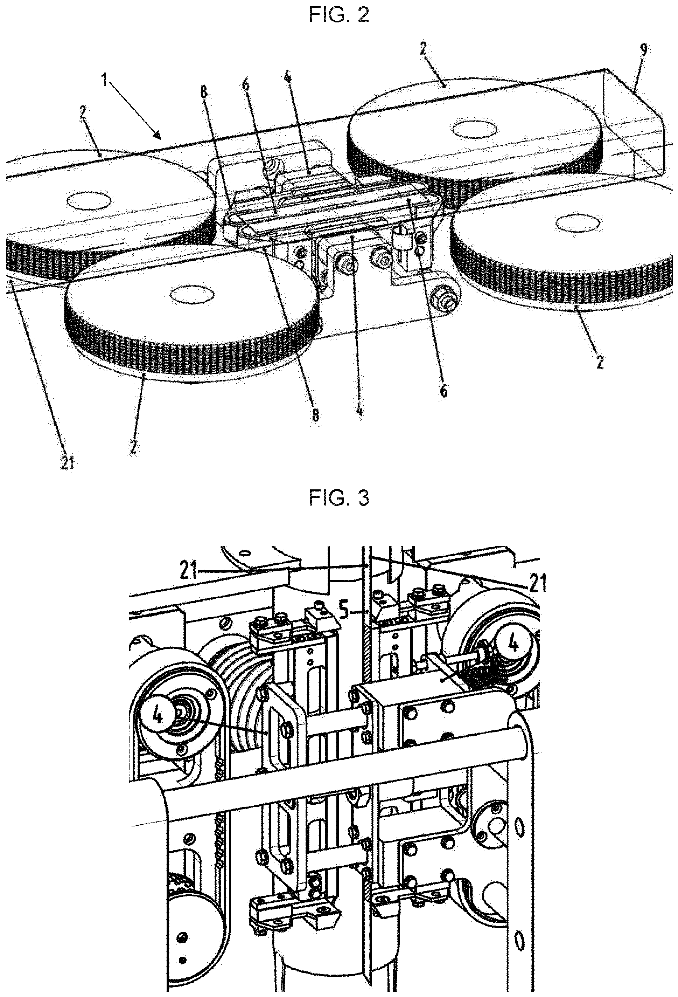

In accordance with an alternative embodiment, as illustrated in figure 2, the conveyance path is substantially horizontal. In this case, the packaging is of the HFFS type.

The present invention can however be used with any conveyance path inclined with respect to the horizontal or vertical.

In the embodiment described and illustrated herein, there are two belt transfer units 3 arranged on two opposite sides of the tubular casing.

The sealing device 1 comprises sealing means 4 of the two edges 21 folded in a sealing zone 5 of the conveyance path.

Originally, the sealing means 4 is movable towards/away from each other between a first position, in which they are away from the sealing zone 5, and a second position, in which they are in the sealing zone 5.

In the second position, the sealing means 4 is operatively active on the two edges 21 so as to compress and heat them.

According to the invention, the sealing means 4 is arranged on opposite sides of the sealing zone 5. The passage from the first to the second position takes place by bringing the sealing means 4 near to each other and to the sealing zone 5.

In the embodiment described and illustrated herein, the sealing means 4 is controlled to impart a substantially constant sealing temperature to the folded edges 21 in the second position. The temperatures are usually comprised between 180°C and 200°C depending on the nature and composition of the film to be sealed.

According to the invention, the sealing means 4 comprises two sliding blocks 6 arranged on opposite sides of the sealing zone 5.

According to the invention, the two sliding blocks 6 are opposite and movable towards each other and towards the sealing zone 5.

In accordance with another embodiment which is not in the scope of the invention, one of the two sliding blocks 6 is fixed at the sealing zone 5 and the other sliding block 6 is movable towards the fixed sliding block 6.

The sealing device 1 comprises movement means 7 for moving the sliding blocks 6 between the two positions.

The movement means 7 is configured to exert a first pressure on the sliding blocks 6 to move them between the first and the second position. The first pressure is identified as "high pressure" and is used to overcome frictions.

Once the sliding blocks 6 have been brought into the second position, the movement means 7 is configured to exert a second pressure on the sliding blocks 6 for the compression of the two edges 21 to be sealed. The second pressure is lower than the first pressure and is identified as "low pressure". For example, the second pressure is ten times lower than the first pressure. In fact, the pressure used to move the sliding blocks 6 is too high for the compression of the edges 21.

In accordance with one embodiment, illustrated in the figures, the movement means 7 comprises a pneumatic piston. Through the action of the pneumatic piston, the two sliding blocks 6 are brought into contact with the two opposite edges 21 of the moving tubular casing.

In accordance with an alternative embodiment (not illustrated), the movement means 7 comprises an electric motor coupled to a screw/nut screw system.

The sealing means 4 comprises two heating elements 8 mounted at the ends of the sliding blocks 6. The two heating elements 8 are connected to an electronic power supply system that heats them. Preferably, the heating elements 8 are metal straps. In other words, the heating elements 8 are plate-like.

The combined action of the pressure exerted by the sliding blocks 6 and of the heat generated by the metal straps 8 connected to the power supply system causes the sealing of the two edges 21.

Preferably, the sealing device 1 comprises a cooling system (not illustrated) for cooling the sealed edges 21 located immediately downstream of the sealing means 4 with respect to the conveyance path. In the embodiment described and illustrated herein, the cooling system comprises at least one pair of nozzles configured to deliver air towards the sealing zone 5.

A packaging device for packaging food products according to the present invention is described below.

The packaging device, indicated with number 100, comprises a sealing device 1 as described above.

Upstream of the sealing device 1, the packaging device 100 comprises a forming tube 101 that receives at the inlet a film sheet 20 and forms it in a tubular shape. The forming tube 101 is of known type and will not be further described.

Accordng to the invention, the forming tube 101 comprises a folding and coupling device 10 for folding and coupling the edges 21 of the film. The folding and coupling device 10 of the edges 21 comprises two rods having longitudinal extension along the forming tube 101. The two rods are arranged parallel and facing each other so as to define a slot through which the edges 21 are forced to pass. In this way, the edges 21 are folded outward.

Downstream of the sealing device 1, the packaging device 100 comprises a cutting device of the film 20 folded into a tubular shape into packages. Preferably, the cutting device is of the jaw type.

A process for sealing edges of a film bent into a tubular shape for continuous packaging of food products, according to the present invention, is described below. The sealing process is advantageously implemented by a sealing device 1 as described above.

The film 20 has two longitudinal edges 21 folded outward. The sealing of the two edges 21 involves the formation of the so-called fin (also known as "fin seal", "lap seal", "pinch seal").

The present invention is particularly effective since the tubular casing is made of paper material. In this case, heat-sealing material is applied along at least one of the two edges 21 to facilitate the sealing of the edges 21. In this case, the tubular casing is a coupling of paper and heat-sealing film.

The sealing process comprises the step of conveying the film 20 forward along a conveyance path.

During the step of conveying the continuous film 20 forward along a conveyance path, the process comprises the step of sealing the two folded edges 21 together.

Originally, the step of sealing the two folded edges 21 together comprises the sub-step of bringing the two edges 21 near each other in order to place them in contact and compress them and the sub-step of heating the two edges 21. These two sub-steps are at least partly performed simultaneously.

Preferably, the step of bringing the two edges 21 near each other in order to place them in contact and compress them takes place from opposite sides of the edges 21.

Preferably, the step of heating the two edges 21 takes place continuously at a predetermined sealing temperature.

Preferably, the sealing process comprises the step of cooling the two sealed edges 21, during the step of conveying the continuous tubular casing forward along a conveyance path.

The temperatures are usually comprised between 180°C and 200°C depending on the nature and composition of the film to be sealed.

Preferably, before conveying the film 20 forward along a conveyance path, the sealing process comprises the step of folding the film 20 starting from a sheet so that it has the two longitudinal edges 21 folded outward. This step is carried out by a forming tube 101.

From the description given, the features of the sealing process and device for continuous packaging of food products inserted in a continuous tubular casing and of the packaging device for packaging food products according to the present invention are clear, as are the advantages thereof.

In particular, the fact that the sealing means acts from opposite sides of the sealing zone and therefore of the two edges, with a combined compression and continuous heating action, allows to obtain an optimal sealing when the film is made of paper material.

With reference to the scratch sealing, which from a mechanical point of view is the type that is closest to the present invention, a lower wear of the components and a significantly reduced required power (1300 Watts instead of 2700 Watts) is obtained. Furthermore, the present invention can also be used for the packaging of frozen products as there is no high overheating that is typical of other sealing methods.

Furthermore, the present invention exploits a high localized temperature combined with the compression of the edges. This allows small masses to be used: the sealing straps have thicknesses of the order of tenths of a millimetre.

## Claims

1. A sealing device (1) for sealing edges (21) of a continuous film (20) made of paper material and folded into a tubular shape for continuous packaging of food products, said edges (21) extending longitudinally and being folded outward, comprising:
conveying means (2) configured to convey the continuous film (20) forward along a conveyance path;sealing means (4) configured to seal the two folded edges (21) together in a sealing zone (5) of the conveyance path during the conveying of the continuous film (20) forward along said conveyance path,wherein the sealing means (4) are movable between a first position, in which they are away from the sealing zone (5), and a second position, in which they are in the sealing zone (5),
in the second position said sealing means (4) being operatively active on the two edges (21) so as to compress and heat them,
wherein the sealing means (4) are arranged on opposite sides of the sealing zone (5), the passage from the first to the second position taking place by bringing the sealing means (4) near to each other and to the sealing zone (5),
wherein the sealing means (4) comprise:
- two sliding blocks (6) that are opposite relative to the sealing zone (5) and movable towards/away from each other between the two positions;
- two heating elements (8), each mounted at one end of one of the sliding blocks (6);
movement means (7) for moving the sliding blocks (6) between the two positions,
**characterized in that**, said
movement means (7) are configured to:
- exert a first pressure on the sliding blocks (6) to bring them from the first to the second position, or vice-versa;
- exert a second pressure, lower than the first pressure, on the sliding blocks (6) in the second position to compress the edges (21).

2. The sealing device (1) according to claim 1, wherein the sealing means (4) are configured to exert, in the second position, a substantially constant sealing temperature.

3. The sealing device (1) according to claim 1 or 2, comprising a cooling system for cooling the sealed edges (21), located immediately downstream of the sealing means (4).

4. The sealing device (1) according to any one of the preceding claims, wherein the heating elements (8) are metal straps.

5. The sealing device (1) according to any one of claims 1 to 3, wherein the heating elements (8) are plate-like.

6. A packaging device (100) for packaging food products, comprising:
a sealing device (1) according to any one of claims 1 to 5;
a forming tube (101) which receives a sheet of film (20) and forms it in a tubular shape, arranged upstream of the sealing device (1),
said forming tube (101) comprising a folding and coupling device of the edges (21);
a cutting device of the film (20) bent into a tubular shape into packages, arranged downstream of the sealing device (1).

7. A process for sealing edges (21) of a film (20) bent into a tubular shape for continuous packaging of food products, said edges (21) extending longitudinally and being folded outward, said process for sealing being performed by means of a sealing device (1) according to any one of claims 1 to 5, said process for sealing comprising the steps of:
conveying the film (20) forward along a conveyance path;
during the step of conveying the film (20) forward along a conveyance path, sealing the two folded edges (21) together,
wherein the step of sealing the two folded edges (21) together comprises the following sub-steps:
bringing the two edges (21) near each other from opposite sides of the edges (21) in order to place them in contact and compress them;
heating the two edges (21),
said step of bringing the two edges (21) near each other in order to place them in contact and compress them and said step of heating the two edges (21) being at least partly performed simultaneously.

8. The sealing process according to claim 7, wherein the step of heating the two edges (21) takes place continuously at a predetermined sealing temperature.

9. The sealing process according to any one of claims 7,8, comprising the step of cooling the two sealed edges (21) during the step of conveying the film (20) forward along a conveyance path.

## Patentansprüche

1. Siegelvorrichtung (1) zum Siegeln von Kanten (21) einer durchgehenden Folie (20), bestehend aus Papiermaterial und gefaltet in eine rohrförmige Form für das durchgehende Verpacken von Lebensmitteln, wobei die Kanten (21) sich längs erstrecken und nach außen gefaltet sind, umfassend:
Fördermittel (2), die ausgelegt sind, um die durchgehende Folie (20) entlang eines Förderwegs vorzuschieben; Siegelmittel (4), die ausgelegt sind, um die beiden gefalteten Kanten (21) in einer Siegelzone (5) des Förderwegs während des Vorschubs der durchgehenden Folie (20) entlang des Förderwegs zusammenzusiegeln, wobei die Siegelmittel (4) zwischen einer ersten Position, in der sie von der Siegelzone (5) entfernt sind, und einer zweiten Position, in der sie sich in der Siegelzone (5) befinden, bewegbar sind,
wobei die Siegelmittel (4) in der zweiten Position betriebswirksam auf den beiden Kanten (21) aktiv sind, sodass diese komprimiert und erhitzt werden,
wobei die Siegelmittel (4) auf entgegengesetzten Seiten der Siegelzone (5) angeordnet sind, wobei der Wechsel von der ersten zur zweiten Position stattfindet, indem die Siegelmittel (4) aneinander und an die Siegelzone (5) herangeführt werden,
wobei die Siegelmittel (4) Folgendes umfassen:
- zwei Schiebeblöcke (6), die relativ zur Siegelzone (5) entgegengesetzt und hinführend zueinander/wegführend voneinander zwischen den beiden Positionen bewegbar sind;
- zwei Heizelemente (8), die jeweils an einem Ende von einem der Schiebeblöcke (6) montiert sind;
Bewegungsmittel (7) zum Bewegen der Schiebeblöcke (6) zwischen den beiden Positionen,
**dadurch gekennzeichnet, dass** die Bewegungsmittel (7) ausgelegt sind, um
- einen ersten Druck auf die Schiebeblöcke (6) auszuüben, um diese von der ersten zur zweiten Position oder umgekehrt zu bringen;
- einen zweiten Druck, der niedriger ist als der erste Druck, auf die Schiebeblöcke (6) in der zweiten Position auszuüben, um die Kanten (21) zu komprimieren.

2. Siegelvorrichtung (1) nach Anspruch 1, wobei die Siegelmittel (4) ausgelegt sind, um in der zweiten Position eine im Wesentlichen konstante Siegeltemperatur auszuüben.

3. Siegelvorrichtung (1) nach Anspruch 1 oder 2, umfassend ein Kühlsystem zum Kühlen der gesiegelten Kanten (21), das unmittelbar nach den Siegelmitteln (4) befindlich ist.

4. Siegelvorrichtung (1) nach einem der vorhergehenden Ansprüche, wobei die Heizelemente (8) Metallbänder sind.

5. Siegelvorrichtung (1) nach einem der Ansprüche 1 bis **3,** wobei die Heizelemente (8) plattenähnlich sind.

6. Verpackungsvorrichtung (100) zum Verpacken von Lebensmitteln, umfassend:
eine Siegelvorrichtung (1) nach einem der Ansprüche 1 bis 5;
ein Formungsrohr (101), das einen Folienbogen (20) aufnimmt und ihn in eine rohrförmige Form formt, angeordnet vor der Siegelvorrichtung (1),
wobei das Formungsrohr (101) eine Vorrichtung zum Falten und Kaschieren der Kanten (21) umfasst;
eine Vorrichtung, um die in eine rohrförmige Form gebogene Folie (20) in Verpackungen zu schneiden, angeordnet nach der Siegelvorrichtung (1).

7. Verfahren zum Siegeln von Kanten (21) einer in eine rohrförmige Form gebogenen Folie (20) zum durchgehenden Verpacken von Lebensmitteln, wobei sich die Kanten (21) längs erstrecken und nach außen gefaltet sind, wobei das Siegelverfahren mittels einer Siegelvorrichtung (1) nach einem der Ansprüche 1 bis 5 durchgeführt wird, wobei das Siegelverfahren die folgenden Schritte umfasst:
Vorschieben der Folie (20) entlang eines Förderwegs;
Zusammensiegeln der beiden gefalteten Kanten (21) während des Schritts zum Vorschieben der Folie (20) entlang eines Förderwegs,
wobei der Schritt zum Zusammensiegeln der beiden gefalteten Kanten (21) die folgenden Unterschritte umfasst:
Aneinanderführen der beiden Kanten (21) von entgegengesetzten Seiten der Kanten (21), um diese in Kontakt zu platzieren und zu komprimieren;
Erhitzen der beiden Kanten (21),
wobei der Schritt zum Aneinanderführen der beiden Kanten (21), um diese in Kontakt zu platzieren und zu komprimieren, und der Schritt zum Erhitzen der beiden Kanten (21) mindestens teilweise simultan durchgeführt werden.

8. Siegelverfahren nach Anspruch 7, wobei der Schritt zum Erhitzen der beiden Kanten (21) kontinuierlich bei einer vorbestimmten Siegeltemperatur stattfindet.

9. Siegelverfahren nach einem der Ansprüche 7, 8, umfassend den Schritt zum Kühlen der beiden gesiegelten Kanten (21) während des Schritts zum Vorschieben der Folie (20) entlang eines Förderwegs.

## Revendications

1. Dispositif de scellement (1) pour sceller des bords (21) d'un film continu (20) fait de matériau papier et plié en une forme tubulaire pour un emballage continu de produits alimentaires, lesdits bords (21) s'étendant longitudinalement et étant pliés vers l'extérieur, comprenant :
des moyens de transport (2) configurés pour transporter le film continu (20) vers l'avant le long d'un chemin de transport ; des moyens de scellement (4) configurés pour sceller les deux bords pliés (21) ensemble dans une zone de scellement (5) du chemin de transport pendant le transport du film continu (20) vers l'avant le long dudit chemin de transport, dans lequel les moyens de scellement (4) sont mobiles entre une première position, dans laquelle ils sont éloignés de la zone de scellement (5), et une seconde position, dans laquelle ils sont dans la zone de scellement (5),
dans la deuxième position, lesdits moyens de scellement (4) étant fonctionnellement actifs sur les deux bords (21) de manière à les comprimer et à les chauffer,
dans lequel les moyens de scellement (4) sont disposés sur des côtés opposés de la zone de scellement (5), le passage de la première à la seconde position s'effectuant en rapprochant les moyens de scellement (4) l'un de l'autre et de la zone de scellement (5),
dans lequel les moyens de scellement (4) comprennent :
- deux blocs coulissants (6) qui sont opposés par rapport à la zone de scellement (5) et qui peuvent se rapprocher/s'éloigner l'un de l'autre entre les deux positions ;
- deux éléments chauffants (8), montés chacun à une extrémité de l'un des blocs coulissants (6) ;
des moyens de déplacement (7) pour déplacer les blocs coulissants (6) entre les deux positions,
**caractérisé en ce que** lesdits moyens de déplacement (7) sont configurés pour :
- exercer une première pression sur les blocs coulissants (6) pour les amener de la première à la deuxième position, ou vice-versa ;
- exercer une seconde pression, inférieure à la première pression, sur les blocs coulissants (6) dans la deuxième position pour comprimer les bords (21).

2. Dispositif de scellement (1) selon la revendication 1, dans lequel les moyens de scellement (4) sont configurés pour exercer, dans la seconde position, une température de scellement substantiellement constante.

3. Dispositif de scellement (1) selon la revendication 1 ou 2, comprenant un système de refroidissement pour refroidir les bords scellés (21), situé immédiatement en aval des moyens de scellement (4).

4. Dispositif de scellement (1) selon l'une quelconque des revendications précédentes, dans lequel les éléments chauffants (8) sont des sangles métalliques.

5. Dispositif de scellement (1) selon l'une quelconque des revendications 1 à 3, dans lequel les éléments chauffants (8) sont en forme de plaque.

6. Dispositif d'emballage (100) pour emballer des produits alimentaires, comprenant :
un dispositif de scellement (1) selon l'une quelconque des revendications 1 à 5 ;
un tube de formage (101) qui reçoit une feuille de film (20) et la forme en une forme tubulaire, disposé en amont du dispositif de scellement (1),
ledit tube de formage (101) comprenant un dispositif de pliage et de couplage des bords (21) ;
un dispositif de coupe du film (20) plié en une forme tubulaire en emballages, disposé en aval du dispositif de scellement (1).

7. Procédé de scellement des bords (21) d'un film (20) plié en une forme tubulaire pour un emballage continu de produits alimentaires, lesdits bords (21) s'étendant longitudinalement et étant pliés vers l'extérieur, ledit procédé de scellement étant effectué au moyen d'un dispositif de scellement (1) selon l'une quelconque des revendications 1 à 5, ledit procédé de scellement comprenant les étapes de :
transporter le film (20) vers l'avant le long d'un chemin de transport ;
lors de l'étape de transporter le film (20) vers l'avant le long d'un chemin de transport, sceller les deux bords pliés (21) ensemble,
dans lequel l'étape de sceller les deux bords pliés (21) ensemble comprend les sous-étapes suivantes :
rapprocher les deux bords (21) l'un de l'autre à partir de côtés opposés des bords (21) afin de les mettre en contact et de les comprimer ;
chauffer les deux bords (21),
ladite étape de rapprocher les deux bords (21) l'un de l'autre afin de les mettre en contact et de les comprimer et ladite étape de chauffer les deux bords (21) étant au moins partiellement effectuée simultanément.

8. Procédé de scellement selon la revendication 7, dans lequel l'étape de chauffer les deux bords (21) a lieu en continu à une température de scellement prédéterminée.

9. Procédé de scellement selon l'une quelconque des revendications 7, 8, comprenant l'étape de refroidir les deux bords scellés (21) pendant l'étape de transporter le film (20) vers l'avant le long d'un chemin de transport.
